# EUROPEAN PATENT APPLICATION

(11) **EP 4 509 959 A1**
(43) Date of publication of application: **19.02.2025**
(21) Application number: 23275120.6
(22) Date of filing: 16.08.2023
(51) Int. Cl.: G06F 3/01, G06F 3/03, B64D 43/00

(54) **A SYSTEM AND METHOD FOR TRACKING MOVEMENT OF A USER**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

According to an aspect of the present invention, there is provided a method of providing tracking data to a user of a platform in an environment, wherein the platform has associated therewith one or more input and output devices configured to track one or more variables of data associated with the user, the platform, or the environment; to generate the tracking data; and to provide an output representing the tracking data, the method comprising: processing data received from one or more input devices to determine tracking data relating to a relative position of the user to at least one of the platform and the environment; identifying the one or more input devices of the received data the or each having associated therewith a respective priority value; determining a target tracking score level based on a required level of safety; determine a first tracking score for a first input device of the one or more input devices, having a highest priority; determine a second tracking score for a second input device of the one or more input devices, having a second highest priority; combining the first tracking score with the second tracking score to produce a consolidated tracking score; comparing the target tracking score with consolidated tracking score; and in response to determining the consolidated tracking score is greater than or equal to the target tracking score, creating consolidated tracking data from the first input device and the second output device; providing the consolidated tracking data to the user.

## Description

### FIELD

The present invention relates to a system and method for tracking movement of a user, particularly, but not exclusively, to tracking movement of a user located in a vehicle.

### BACKGROUND

Tracking of an object and the determination and tracking of orientation of the object is known in many scenarios. Head or helmet-mounted display systems incorporating a tracking system to provide head or helmet orientation data for use in positioning display artefacts in a display system in which the positioning of symbols or other artefacts in the display may be used. In some examples, these systems may be used by a user travelling on or within a moveable platform, such as an aircraft or other vehicle.

In some situations, such system may be subject to buffeting or similar rapid induced changes in orientation when travelling on or within a moveable platform, such as an aircraft or other vehicle. This can make tracking more difficult.

Safety solutions in vehicles are often required to conform to a civil hazard classification scheme and functional safety guidance. These schemes have different levels of classification where low levels are less reliable than higher levels. In some environments, low or medium levels may be adequate and in others higher levels are essential.

In an aircraft environment, medium integrity/level solutions are generally easy to implement with currently known tracking systems and devices. An example of a medium level solution is one able to be used in a major hazard classification risk scenario.

Use of a head mounted device (HMD) as a Primary Reference typically inherits classifications of hazardous and/or catastrophic for provision of hazardously misleading information (HMI) for example for flight critical data. This drives a no single point failure requirement on to the HMD architecture. Loss of critical symbology on a single display typically remains as a Minor risk. Loss of the same information on all cockpit displays including for example head down displays (HDDs) and any Get You Home instruments is typically ranked as Catastrophic, but the risk is shared across the different systems. Therefore, for any single display surface, the criticality challenges tend to be for the HMI cases in which the HMD tracker contributes to all conformally displayed information.

Conventional practice utilises multiple similar helmet-based tracking solutions e.g., a dual optical tracker, to provide additional integrity but this can add weight and lead to other disadvantages.

A need exists for tracking systems and associated methods which are not encumbered by the problems exhibited in known systems and which provide a high-fidelity tracking system whatever the risk scenario.

### SUMMARY

According to an aspect of the present invention, there is provided a method of providing tracking data to a user of a platform in an environment, wherein the platform has associated therewith one or more input and output devices configured to track one or more variables of data associated with the user, the platform, or the environment; to generate the tracking data; and to provide an output representing the tracking data, the method comprising: processing data received from one or more input devices to determine tracking data relating to a relative position of the user to at least one of the platform and the environment; identifying the one or more input devices of the received data the or each having associated therewith a respective priority value; determining a target tracking score level based on a required level of safety; determine a first tracking score for a first input device of the one or more input devices, having a highest priority; determine a second tracking score for a second input device of the one or more input devices, having a second highest priority; combining the first tracking score with the second tracking score to produce a consolidated tracking score; comparing the target tracking score with consolidated tracking score; and in response to determining the consolidated tracking score is greater than or equal to the target tracking score, creating consolidated tracking data from the first input device and the second output device; providing the consolidated tracking data to the user.

In an aspect in response to determining the consolidated tracking score is less than the target tracking score: determine a further tracking score for a further input device of the one or more input devices, having a priority lower than the first priority of the second priority; combining the further tracking score with the consolidated tracking score to produce a further consolidated tracking score; comparing the target tracking score with further consolidated tracking score; in response to determining the further consolidated tracking score is greater than or equal to the target tracking score, creating further consolidated tracking data from the first input device; the second output device; and the further input device; and providing the further consolidated tracking data to the user.

In an aspect in response to determining the consolidated tracking score is less than the target tracking score generating an alarm and reconfiguring any of the one or more input devices which are identified as operating below a predetermined level.

In an aspect providing tracking data to the user comprises displaying tracking data via a display device.

In an aspect capturing data from the one or more input devices.

In an aspect capturing data relating to at least one of data imaging, illumination, eye-tracking; sound, movement, gestures, velocity, acceleration, position and location and features present in the environment.

In an aspect selecting two or more input devices from the one or more input devices based on the priority levels of the input device.

In an aspect selecting the first input device and the second input device from the one or more input devices based on a use case.

In an aspect there is corroborating data from different input devices to provide the consolidated tracking score

In an aspect there is continual monitoring of the consolidated tracking score and comparing with the target tracking score to verify the consolidated tracking score.

According to a further aspect of the present invention there is provided a system for providing tracking data to a user of a platform in an environment, the system comprising: a processor configured to: process data received from one or more input devices to determine tracking data relating to a relative position of the user to at least one of the platform and the environment; identifying the one or more input devices of the received data the or each having associated therewith a respective priority value; determining a target tracking score level based on a required level of safety; determine a first tracking score for a first input device of the one or more input devices, having a highest priority; determine a second tracking score for a second input device of the one or more input devices, having a second highest priority; combining the first tracking score with the second tracking score to produce a consolidated tracking score; comparing the target tracking score with consolidated tracking score; and in response to determining the consolidated tracking score is greater than or equal to the target tracking score, creating consolidated tracking data from the first input device and the second output device; providing the consolidated tracking data to the user.

In an aspect the processor is further configured to: in response to determining the consolidated tracking score is less than the target tracking score: determine a further tracking score for a further input device, the one or more input devices, having a priority lower than the first priority or the second priority; combining the further tracking score with the consolidated tracking score to produce a further consolidated tracking score; comparing the target tracking score with further consolidated tracking score; in response to determining the further consolidated tracking score is greater than or equal to the target tracking score, creating further consolidated tracking data from the first input device; the second output device; and the further input device; and providing the further consolidated tracking data to the user.

In an aspect the processor is further configured to: in response to determining the consolidated tracking score is less than the target tracking score generating an alarm and reconfiguring any of the one or more input devices which are identified as operating below a predetermined level.

In an aspect the system further comprises a display providing tracking data to the user.

In an aspect the system further comprising a plurality of input devices.

In an aspect the input devices further comprising at least two of an optical sensor; a light sensor; an eye tracker-sensor; an audio sensor; an inertial sensor; a movement sensor; a velocity and acceleration sensor; a position and location sensor.

In an aspect the processor is further configured to select the first input device and the second input device from the one or more input devices based on the priority levels of the input device.

In an aspect the system selects the first input device and the second input device from the one or more input devices based on a use case.

In an aspect there is corroborating data from different input devices to provide the consolidated tracking score.

In an aspect there is continual monitoring of the consolidated tracking score and comparing with the target tracking score to verify the consolidated tracking score.

In an aspect the system comprises a head mounted device.

In an aspect the head mounted device comprises a head mounted display.

In an aspect the head mounted device comprises a helmet on which the head mounted display is mounted.

According to a further aspect of the present invention, there is provided a head mounted display including a system of a previous aspect.

According to a further aspect of the present invention, there is provided a machine readable medium when executed on a computer is configured to implement the method of a previous aspect.

### BRIEF DESCRIPTION OF THE FIGURES

Embodiments of the invention will now be described by way of example only with reference to the figures, in which:
Figure 1 an exemplary system in accordance with an aspect of the present invention.
Figure 2 shows a representation of a helmet with components suitable for implementing the functionality in accordance with an aspect of the present invention.
Figure 3 shows a schema for a multisource tracker consolidation in accordance with an aspect of the present invention.
Figure 4 shows a flow chart of a method for a multisource tracker consolidation in accordance with an aspect of the present invention.

### DETAILED DESCRIPTION

The present invention relates generally to a tracking system and method to accurately identify the location of a user on a platform, such as an aircraft, and all platform related instruments and control devices in the vicinity so that all necessary information can be directed to the user who can navigate and move the platform safely.

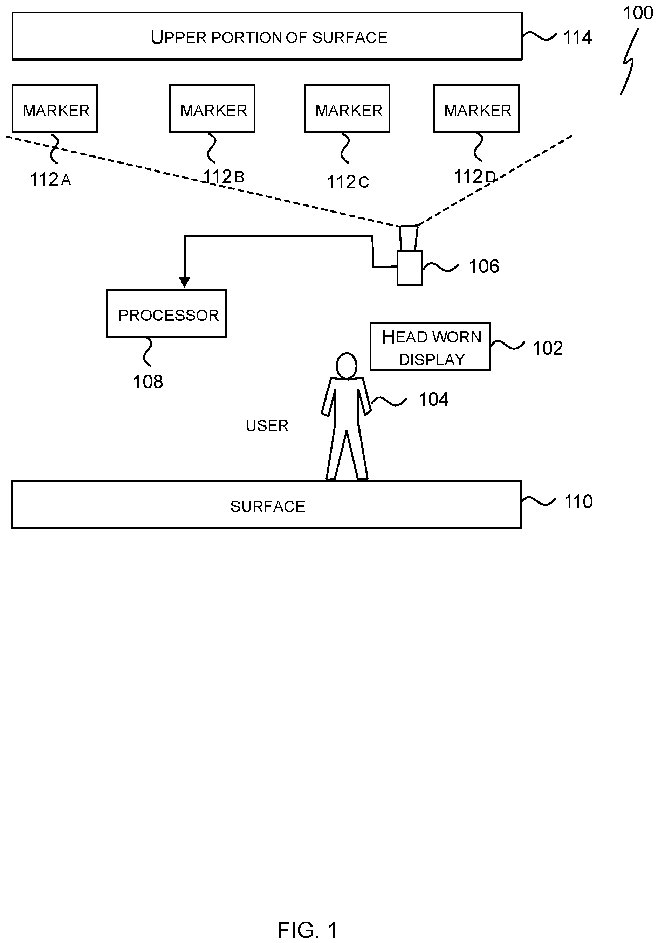

Referring now to Figure 1, a system 100 in accordance with an aspect of the present invention is shown. The system 100 comprises a head-worn display (HWD) device 102 adapted to be supported on a helmet (not shown in Figure 1) worn by a user 104. The system also includes a camera 106 and a processor 108.

Figure 1 further shows a surface 110, which may be interchangeably referred to as a platform, and comprises any given surface on which the user 104 is situated. The surface 110 may include but is not limited to a vehicle or a flight simulation device. The user 104 situated on the surface 110 wears the HWD 102. The imaging device or camera 106 may be integrated into the body of the HWD 102 or mounted at any suitable location on the HWD 102 such that it can observe numerous views and equipment, as will be described in further detail below. The camera may collect images of markers 112a, 112b, 112c, 112d disposed at predetermined locations relative to the surface 110. In Figure 1, the markers 112a, 112b, 112c, 112d are illustrated as being disposed on an upper portion 114 of the surface, it is appreciated that the markers 112a, 112b, 112c, 112d can be disposed on any suitable location on the surface 106.

The camera 106 may be integral to the HWD 102. The camera 106 may include a plurality of cameras. The cameras may include but not be limited to stereo cameras or depth cameras. In Figure 1, the camera is shown as upward facing, it is appreciated that the camera 106 can be located or positioned at any suitable location on the HWD 102 such that it is configurable to capture images of many aspects of the environment such as images relating to trackers or devices such as an opto-inertial tracker, a HMD camera tracker, a head movement tracker, an eye tracker, a hand gesture tracker, a marker tracker, a platform and attitude tracker and any other device as may be needed depending on the use requirements of the system.

The trackers may include or be sensor devices which detect and collect variables in data including imaging, illumination, eye-tracking, sound, movement, gravitation, heat, velocity, acceleration, position and location or any other attribute or any other feature present in the environment of interest. The sensors include an optical sensor; a light sensor; an eye tracker-sensor; an audio sensor; an inertial sensor; a movement sensor; a heat sensor; a gravitational sensor; a velocity and acceleration sensor; position and location sensor etc. In the present example, the environment includes an aircraft cockpit and the environment outside the cockpit. It will be appreciated that at least some of the sensors and associated detected data may be exterior to the cockpit.

Tracking data is collected from sensors and is further used by the user to navigate the platform in the environment. Tracking data is used herein to describe data received from one or more input sources of tracking a user and any moveable elements in a fixed space, platform, or the like. As indicated elsewhere the fixed place or platform may be the cockpit of a vehicle such as an aircraft. The tracking data is processed and provides output tracking data for the user which is configured to be displayed or otherwise supplied to the user. In the latter case this could include haptic feedback from a joystick or any other haptic feedback. The output tracking data further includes real world images of the user and virtual images generated by the system to represent any other output data. The representation may be in the form of symbology, real or virtual images of local controllers which may or may not move; external views outside the platform, which may be real or virtual and any other appropriate output data as the use case dictates.

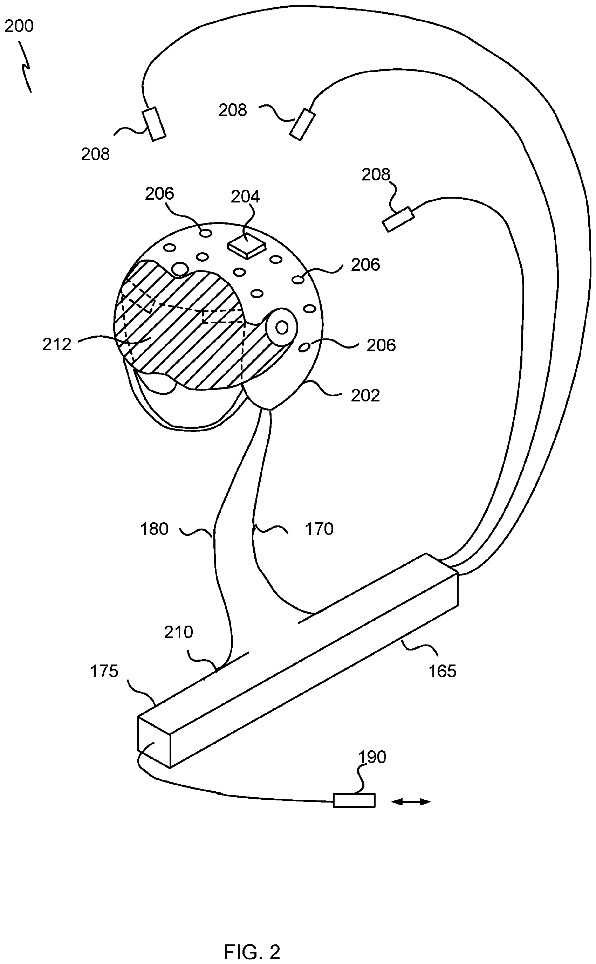

Referring to Figure 2, a helmet tracker system 200 is shown integrated with a helmet 202. The helmet tracker system comprises a one or more sensor devices 204. The sensors may include one or more inertial sensor components, one or more cameras and any other sensor which is suitable to capture features of the environment or the user which may be useful to track the user in some manner. An inertial sensor component may include three gyro elements 204, fitted to the external shell of the helmet 202. The optical helmet tracker system further comprises an arrangement of light emitting diode (LED) devices 206 integrated within or mounted upon the external shell of the helmet 202 and an arrangement of one or more cameras 208, each mounted at a fixed position, e.g., within an aircraft cockpit, such they have a line of sight view to at least some of the LEDs 206 at any likely orientation of the helmet 202. A system control device (controller) 210 is linked to each of the cameras 208 to receive image data resulting from the detection of light emitted by the LEDs 206 within the camera's line of sight. The controller 210 is also linked to the LEDs 206 in the helmet 202 by means of an appropriate link (which may be wired or wireless) and the controller 210 is configured such that it may control the illumination of the LEDs 206. The controller 210 is arranged, for example, to trigger a cyclic illumination of the LEDs 206 in predetermined patterns, to receive the resultant image data from the cameras 208. The controller 210 includes a digital processor programmed to implement an appropriate optical helmet tracker algorithm, or a combination of hardware and software-implemented functionality, arranged to illuminate the LEDs 206 and to interpret the resultant image data from the cameras 208 to determine helmet orientation relative to a frame of reference associated with the aircraft.

The controller 210 is further configured to implement the functionality of the overall helmet tracker system as described in further detail below. The controller 210 is linked to the helmet 202 by any appropriate means (not shown, and may be wired or wireless by way of example) and is configured to receive a rate data output from the one or more inertial sensor components, and also to convey image data received from an aircraft-installed image generation system (not shown) via an interface, to a helmet-mounted display integrated within the helmet 202 (not shown explicitly in Figure 2). Further sensor data may be received and analysed within the control which produces an output to be displayed to the user. A display comprises a helmet-mounted display system which may be a visor-projection display system, any type of HWD, or a waveguide-based display. The display is arranged to present images to the user such that they appear overlaid upon the user's view, through a visor 212, of an external scene or environment.

The controller is arranged to output measures of helmet orientation to an aircraft-installed image generation system (not shown) for use in calculating the position of certain types of symbol and data intended for display in the helmet-mounted display, as appropriate. The output is a representation for display to the user at any moment in time and changes dynamically as the vehicle, user and environment changes. The output representation is in real or close to real time. In a typical aircraft installation of a helmet-mounted display system, incorporating the hybrid helmet tracker system of the present invention, one or more further modules (not shown in Figure 2) are likely to be installed within the aircraft for the purposes of generating images for display by any display systems installed or in use on the aircraft. Such display systems may include a head-up display (HDD) and/or a head-down display (HDD) in addition to the helmet-mounted display of relevance to applications of the present invention. Such further modules are likely to be linked to a standard aircraft data bus and so have access to aircraft orientation data output by an aircraft navigation system and to data from other systems with a need to display information to the pilot. Image data including symbols and data for display on the helmet-mounted display, together with updates to aircraft orientation received over the aircraft data bus by such further modules, may be passed to the controller 210 as required.

As mentioned above, safety is an important aspect of controlling a vehicle. This is particularly the case in piloting an aircraft where the vehicle moves at high speed and is subject to many external and internal factors which can hinder the user in controlling the aircraft. Different safety levels are required in different scenarios. In some scenarios, minor problems with sensors and image presentation can be dealt with by the use of dual devices. But this may not always be practical and if a certain type of tracking fails completely, even having duplicates will not work.

The present invention in seeking to overcome this and other problems associated with safely tracking variables used in piloting a vehicle have identified a solution. This is the use of Dissimilar Tracking Technologies (DTT) to support high-integrity HMD hosted functions. This idea goes beyond the random selection of "some other tracking technology". Instead, the invention is focused on ensuring safety in so called hazardous and catastrophic risk scenarios. The system and method rely on corroborating data from different source devices and a continual monitoring of integrity to identify issues in real time so that action can be taken to get the tracking back to a valid state immediately. The manner in which this is achieved will now be described in further detail. In addition, in different use cases different combinations of tracking data or inputs may be preferred over others. This is also taken into consideration in the generation of a high-integrity consolidated tracker output.

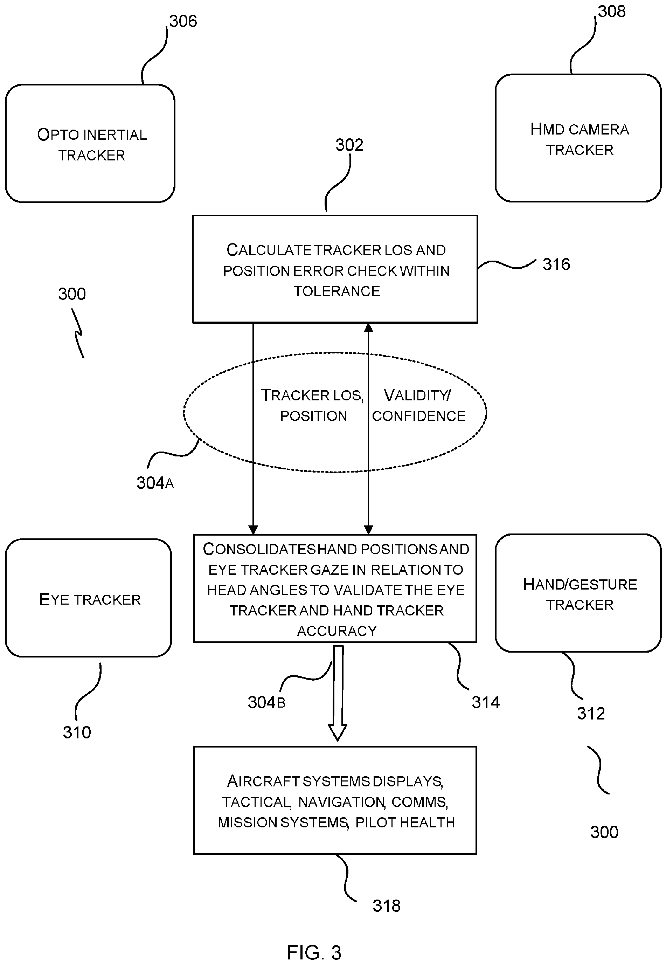

Referring to Figure 3 a multiple source tracker consolidation system 300 and scheme is shown. The system 300 includes at a high level a controller 302 which generates high-integrity consolidated tracker data 304a, 304b. The controller 302 communicates with multiple devices, including an opto-inertial tracker 306 and an HMD camera tracker 308. The controller further communicates with further multiple devices including an eye tracker 310 and a hand gesture tracker 312 via a consolidation module 314. The controller further causes generation of an output 304a, 304b which is used to control the aircraft and provide data to the user to further control the aircraft.

The opto-inertial tracker 306 is multifunctional and provides data to the controller and including metrics such as validity, coasting status, tracker LOS, position, and a figure of merit. The opto-inertial tracker device 306 includes optical tracking using, for example, an IR sensor in the cockpit to track the LEDs on the helmet or HMD to determine head angles and position. The opto-inertial tracker 306 further provides inertial tracking using Inertial Measurement Units (IMUs) in the helmet or HMD to determine head angles and rates in free space and to resolve local angles using aircraft angles and co-ordinates. In addition, the opto-inertial tracker 306 includes a tracker prediction unit which calculates predicted tracker angles with a figure of merit to indicate accuracy and reliability.

The HMD camera tracker device 308 is also multifunctional and provides data to the controller including metrics such as validity, coasting status, tracker LOS, and position. The HMD camera tracker 308 uses Fiducials and/or markers in the cockpit to calculate HMD angles and position. Day or night cameras are used depending on the light condition. The HMD camera tracker 308 also uses IMU(s) in the HMD (ideally in the camera assembly) to determine head angles and rates.

The eye tracker device 310 communicates with the controller via the consolidation module 314 to provide left and right eye LOS with respect to the HMD. The eye tracker 310 uses reference markers in the cockpit (and on the HMD display) for periodic cross checks as described above.

The hand gesture tracker device 312 via the consolidation module 314 communicates with the controller to provide hand and/or finger positions relative to fixed cockpit reference and data from the HMD optical sensors. Button presses trigger a cross checking of finger position relative to a physical button, a touch screen or any other hand or finger operated input device.

The consolidation module 314 communicates with the controller providing and receiving data. Consolidated hand positions and eye tracker gaze in relation to head angles are provided to the controller and to validate the eye tracker and hand tracker accuracy and assist the controller in consolidation of multiple source tracker data for the aircraft and pilot to generate the high-integrity consolidated tracker data 304b. This will be described in greater detail below.

The controller 302 receives data from the various tracker devices and calculates and outputs tracker LOS and data indicating the position error check is within a required tolerance (validity and tolerance thresholds have been met). The controller provides a crosscheck which validates and/or compares the tracker angles from each source device. If the data agrees with the accuracies for a current application a valid consolidation set of tracker data is output, a confidence figure is calculated which may be used to permit the tracker data to be used for some lower integrity purpose even when there is not 100% compliance.

If tracker data from the opto-inertial tracker 306 and the HMD camera tracker 308 does not agree, the eye and hand trackers can be utilised to identify which source is the most accurate to continue with at lower integrity. When the opto-inertial tracker 306 and the HMD camera tracker 308 have insufficient integrity the consolidation module 314 seeks additional tracking data from other sources to augment and add to the high-integrity consolidated tracker data 304a. For example, the consolidation module 314 then consolidates hand positions and eye tracker gaze in relation to head angles to validate the eye tracker and hand tracker accuracy into high-integrity consolidated tracker data 304b. The controller 302 may further include data 316 indicating a required accuracy for the system which may be linked to other metrics such as for example the HMI level or any other consideration.

Consolidated multiple source tracker data 304b is output to systems of interest 318, including but not limited to, aircraft systems, displays, tactical, navigation, communications, mission systems, pilot health system and the like. It should be noted that when high-integrity consolidated tracker data 304a is sufficiently accurate the high-integrity consolidated tracker data 304b is the same and when high-integrity consolidated tracker data 304a is insufficiently accurate the high-integrity consolidated tracker data 304b is then augmented with additional tracker data from other sources including, but not limited to, the eye and hand trackers.

The present invention relates to the concept of using Dissimilar Tracking Technologies (DTT) and in a tracker integration algorithm used to provide high integrity Tracker LOS, hand positions and eye tracker gaze.

The invention provides a 'no single point failure' requirement for at least some hazardously misleading information (HMI) cases and provides a combination of dissimilar and independent sensor solutions and a high-integrity tracker integrating algorithm for achieving this. It is noted that failure could be complete or partial. In the latter case the degree of failure may be sufficient to constitute failure if the performance of a device is below a predetermined level. A below threshold level of performance can be as dangerous as complete failure if the device is sufficiently compromised.

Use of DTT includes using combinations of, for example, opto-inertial tracking, HMD camera tracking, eye tracking, and hand gesture tracking. In the present invention at least two of these sources are used to provide a single high-integrity tracker function. This operates for either as `continuously provided' or as 'on demand' dependent on the requirements of the high integrity tracker functions.

DTT provides a high integrity solution from multiple dissimilar sources using a high integrity integrating tracking algorithm. Independence of sources are a key feature in providing this high integrity without the specific need to build in high integrity (independent and redundant) solutions into the sensors themselves. Independent crosschecks and solution validation lie in the integrating tracking algorithms and the internal independence or each type of tracking.

When two sources of compatible tracker information are available, the system provides fail safe behaviour, i.e., detection of the first failure, detection and removal of misleading information and/or provision of a warning. The system then reverts to a normal use of other cockpit instrumentation.

When three sources of compatible tracker information are available, the system can provide fail operational behaviour, i.e., detection of the first failure, provision of warning and continued operation with two compatible tracker sources on the basis of subsequent fail-safe behaviour on occurrence of a second failure.

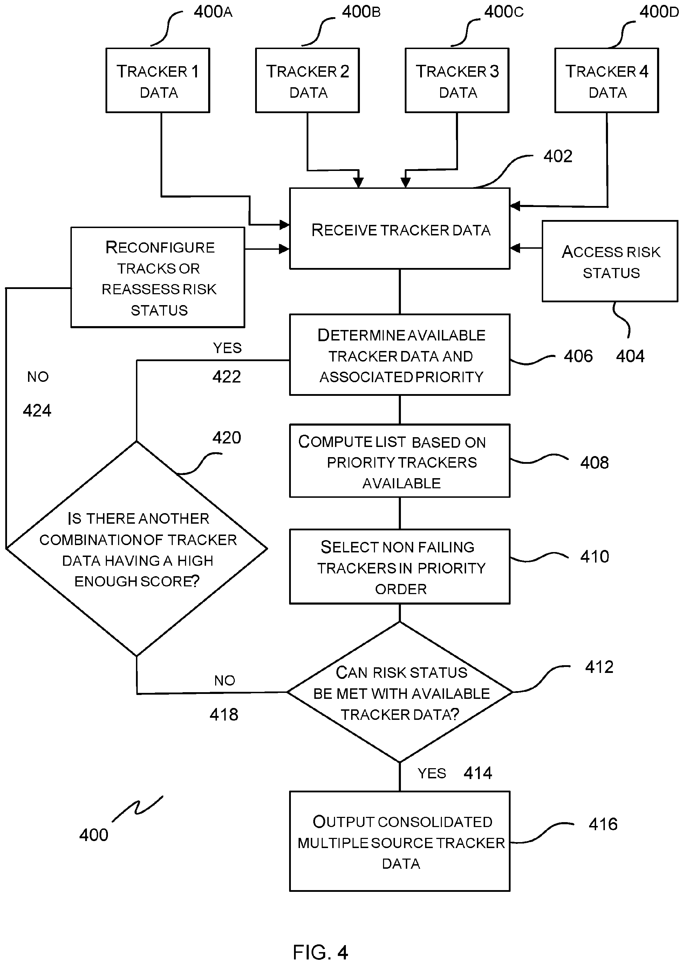

With reference to Figure 4 the method of producing a consolidated multiple source tracker data is described. Tracker data 400a, 400b, 400c, 400d are collected from a plurality of tracker data sources. In this example these correspond to tracker 1 data, tracker 2 data, tracker 3 data and tracker 4 data. Each of the tracker data have a respective priority relative to the others. In this example, tracker 1 data has a priority P1, tracker 2 data has a priority P2, tracker 3 data has a priority P3 and tracker 4 data has a priority P4. For simplicity in this example P1 is the highest and P4 the lowest. It will be appreciated that there could be a different number of sources of tracker data and there could be different priorities for each source. It is further possible that more than two sources can have the same priority.

The tracker data is collected from one or more sensors in or associated with a region of interest, for example a cockpit of an aircraft having a pilot therein. The tracker data is received 402 by the system. The system may be provided with many other inputs but for simplicity these are not shown. An example of additional information that is shown is an assessment of a risk status 404. As described above this could include a classification associated with hazardously misleading information (HMI) metrics. In other words, an indication of the required fidelity of the system. For the purposes of this example a major, hazardous or catastrophic event scenario. Other metric and classifications can alternatively be used.

For each risk scenario and associated classification there are predetermined levels of minimum tracking requirement or threshold. For example, a tracking score of 100% is the highest and is required for the highest risk scenario. This tracking score can be achieved by a specific combination of trackers working in a normal way. Different combinations of trackers working in a normal way can give rise to different tracking score. In addition, if tracking data from a source is unavailable the tracking score will be reduced. This gives rise to problems when the tracking score does not match or exceed a target score required for the current risk state. Should this arise, it may be necessary to reconfigure the system by resetting failing trackers; taking tracking data from other sources and/or reassessing the risk level to rectify the problem and increase the tracking score towards the target score. If the target score cannot be met an alarm may be generated. In addition, the maximum achievable score for tracking will be sought until the tracking integrity is raised to the necessary target score. The system is continually collecting data and assessing the risk level until the system is able to achieve the target score. Again, this may be indicated to the user by an appropriate signal.

Returning to Figure 4, after step 402 the tracker score for all available trackers is determined and compared with the current risk status to determine 406 a list of available trackers and associated priority. Based on the priority order of the available trackers a priority list of tracker data is computed 408. In step 410 the list is updated to remove any failing sources of tracker data.

A determination 412 is made as to whether the non-failing trackers can satisfy the required risk status. If yes 414, the system outputs consolidated multiple source data 416 to whatever source requires the information. In this example via an HMD to a pilot operating a vehicle such as an aircraft.

In the case that a determination 412 as to whether the non-failing trackers can satisfy the required risk status result is a negative 418 the system proceeds to step 420. In step 420 the system seeks an alternative combination of tracker data which matches or is close enough to the target score. If there is another combination 422 the process returns to step 406. If there is no alternative 424, the system is forced to reconfigure the trackers and/or reassess the risk status. The process then returns to step 402.

In the example of Figure 4 the different tracker data can come from any known tracking system including those mentioned herein. The process is aware of the combination of trackers and/or target scores which are required in different risk situations. As indicated above two types of trackers may be adequate for certain risk situations, but this also requires that they contribute a sufficient amount to the score. For example, a combination of tracker data 1 and tracker data 2 may be adequate whilst a combination of tracker data 3 and tracker data 4 is not. In addition, for different activities the contribution to the score in using a particular tracker data type may be different. For example, if the tracker is an eye tracker and the lighting conditions are low the accuracy of the tracking will be less useful and the score and/or the priority may be downgraded. The system and process are highly dynamic and the contributions to tracking of each tracker or type of tracker is being continually monitored and updated as the environment changes. The priority and score of the trackers is being dynamically and continually monitored to determine the optimum consolidated multiple source tracker data to provide for the task and environment at the time.

It is an important aspect of the present invention that in many use cases the security requirements will be of high importance. In this context the use of tracking data could result in a user losing control of a vehicle potentially resulting in a loss of life of the user and/or other people in the vicinity of the failure. In addition, there may be substantial loss of property, for example the aircraft, other vehicle, buildings and the like. As a result, the combination of consolidated data for the user must be of sufficient integrity to safely navigate the vehicle without accident. This is a very different consideration than the use of tracking devices in other situations, for example, where safety and loss are not real.

The present invention may be in the form of a system, a device a method or computer media executed on a computer. The reference to optical is intended to include wavelengths that extend beyond the visible spectrum and any sensors may be adapted accordingly.

In the example shown the scenario is an aircraft and associated cockpit. It will be appreciated that this invention could be used in other scenarios.

## Claims

1. A method (300, 400) of providing tracking data (400A, 400B, 400C, 400D) to a user (104) of a platform (110) in an environment, wherein the platform has associated therewith one or more input and output devices (306, 308, 310, 312, 318) configured to track one or more variables of data (400A, 400B, 400C, 400D) associated with the user, the platform, or the environment; to generate the tracking data; and to provide an output (416) representing the tracking data, the method comprising:
processing data received from one or more input devices to determine tracking data relating to a relative position of the user to at least one of the platform and the environment (110, 402, 406);
identifying the one or more input devices of the received data the or each having associated therewith a respective priority value;
determining (406) a target tracking score level based on a required level of safety (404);
determine (406) a first tracking score for a first input device of the one or more input devices, having a highest priority;
determine (406) a second tracking score for a second input device of the one or more input devices, having a second highest priority;
combining (408) the first tracking score with the second tracking score to produce a consolidated tracking score;
comparing (412) the target tracking score with consolidated tracking score; and
in response to determining the consolidated tracking score is greater than or equal to the target tracking score (414), creating consolidated tracking data from the first input device and the second output device (416);
providing the consolidated tracking data to the user (416).

2. The method (300, 400) according to claim 1, further comprising in response to determining the consolidated tracking score is less than the target tracking score (418):
determine (420) a further tracking score for a further input device of the one or more input devices, having a priority lower than the first priority of the second priority;
combining (406, 408) the further tracking score with the consolidated tracking score to produce a further consolidated tracking score (408);
comparing (412) the target tracking score with further consolidated tracking score;
in response to determining the further consolidated tracking score is greater than or equal to the target tracking score, creating further consolidated tracking data from the first input device; the second output device; and the further input device (412); and
providing (416) the further consolidated tracking data to the user.

3. The method (300, 400) according to claim 1 or claim 2, further comprising in response to determining the consolidated tracking score is less than the target tracking (424) score generating an alarm and reconfiguring any of the one or more input devices which are identified as operating below a predetermined level.

4. The method (300, 400) according to any one of the preceding claims, wherein providing tracking data to the user comprises displaying tracking data via a display device (102, 202, 318).

5. The method (300, 400) according to any one of the preceding claims, further comprising capturing data from the one or more input devices (306, 308, 310, 312, 318).

6. The method (300, 400) according to claim 5, further comprising capturing data relating to at least one of data imaging, illumination, eye-tracking; sound, movement, gestures, velocity, acceleration, position and location and features present in the environment.

7. The method (300, 400) according to any one of the preceding claims, further comprising selecting (410) two or more input devices from the one or more input devices based on the priority levels of the input device.

8. The method (300, 400) according to any one of the preceding claims, further comprising selecting (410) the first input device and the second input device from the one or more input devices based on a use case.

9. The method (300, 400) according to any one of the preceding claims, further comprising continual monitoring of the consolidated tracking score and comparing with the target tracking score to verify the consolidated tracking score.

10. A system (100, 200, 300) for providing tracking data (400A, 400B, 400C, 400D) to a user (104) of a platform (110) in an environment, the system comprising:
a processor (108) configured to implement the method of any preceding claim.

11. The system (100, 200, 300) according to claim 10, wherein the system comprises a head mounted device (102, 202, 212, 318).

12. The system (100, 200, 300) according to claim 11, wherein the head mounted device (102, 202, 212, 318) comprises a head mounted display.

13. The system (100, 200, 300) according to claim 12, wherein the head mounted device (102, 202, 212, 318) comprises a helmet on which the head mounted display is mounted.

14. A head mounted display (102, 202, 212, 318) including the system (100, 200, 300) according to any one of claims 10 to 13.

15. A machine readable medium when executed on a computer is configured to implement the method on any one of claims 1 to 9.
